# EUROPEAN PATENT APPLICATION

(11) **EP 1 459 883 A1**
(43) Date of publication of application: **22.09.2004**
(21) Application number: 04005804.2
(22) Date of filing: 11.03.2004
(51) Int. Cl.: B32B 15/08

(54) **A metal sheet coated with a paint film for use as dew point corrosion preventing cladding members**

(30) Priority: 18.03.2003 JP 2003072924
(71) Applicant: NISSHIN STEEL CO., LTD., Chiyoda-ku Tokyo 100-8366 (JP)
(72) Inventor: Hara, Taketo, Ichikawa-shi Chiba 272-0011 (JP); Nakada, Yasuaki, Ichikawa-shi Chiba 272-0011 (JP); Taomoto, Toshie, Ichikawa-shi Chiba 272-0011 (JP); Entani, Hiroshi, Ichikawa-shi Chiba 272-0011 (JP)
(74) Representative: Müller-Boré & Partner Patentanwälte

(57) **Abstract**

A cladding member of a piping system for conveyance or storage of a low-temperature liquid is a metal sheet coated with a paint film with surface roughness controlled to 2-20 µm by arithmetical mean deviation of profile and 5-60 µm by average wavelength of undulation. The paint film has an infrared emissivity of 0.85 or more, a spectral-emissivity of 0.5 or more within a wavelength region of 4-6 µm and a solar radiation reflectance of 0.2 or more. Heat transmission to the interior of the piping system is suppressed due to the controlled surface roughness, and an outer surface of the cladding member is prevented from dew condensation due to the higher solar radiation reflectance.

## Description

The present invention relates to a painted metal sheet useful as a cladding member of a piping system for conveyance or storage of LNG or other low-temperature liquids, due to its excellent dew prevention ability with suppression of heat transmission during sunshine.

A piping system for conveyance or storage of a low-temperature liquid, e.g. conduits of an LNG plant, is covered with a heat insulator and protected with a cladding member. A power of the piping system for keeping a liquid at a low temperature depends on the heat insulator and the cladding member.

In a piping system for conveyance of a low-temperature liquid at -100 °C or lower, a heat insulator of thickness (hereinafter referred to as "cold-insulating thickness") enough to maintain a surface of a cladding member at a temperature higher than a dew point is wound on a pipe in order to inhibit dew condensation and corrosion on the surface of the cladding member. Although the cold-insulating thickness is calculated according to a model disclosed in ASTM C680-69 or VDI2055, it can be made thinner as increase of heat emissivity of the surface of the cladding member with the presumption that heat transmission by convection is constant.

A thinner heat insulator is more advantageous for construction of a piping system. However, dew condensation sometimes occurs on surface parts of a cladding member, which become shade in daytime or during night, if the piping system is inappropriately designed. The dew condensation causes corrosion and penetration of water into the heat insulator. Penetration of water means decrease of a cold-insulating power. Corrosion promotes partial evaporation of a liquid in a pipe and significantly degrades conveyance efficiency. Therefore, the cladding member is necessarily checked in predetermined intervals and replaced by a new member in response to propagation of corrosion.

A steel sheet coated with a paint film having an infrared emissivity of 0.8-0.85 is proposed as a cladding member of a piping system in order to inhibit dew condensation, by "Piping and Process Equipment" (March 1996) pp.2-7. The coated steel sheet with a high infrared emissivity enables reduction of a cold-insulating thickness by 20-30 %, compared with a naked stainless steel sheet, an Al-coated steel sheet or an aluminum sheet which have an infrared emissivity of 0.2-0.4. Due to the high infrared emissivity, an dew prevention ability is improved only by replacing a cladding member of an existing piping system without change of a cold-insulating thickness.

A paint film, which has been conventionally formed on a steel sheet, has a spectral-emissivity within a wavelength region of 4-6 µm relatively lower than an emissivity within the other wavelength regions. The lower spectral-emissivity causes decrease of a total infrared emissivity.

The emissivity of the paint film generally depends on its thickness, and the infrared emissivity becomes higher as increase of the thickness. However, a paint film of a pre-coated metal sheet shall be controlled to thickness below a predetermined value in order to fulfill other requirement, and it is not practical to thicken the paint film merely aiming at improvement of an infrared emissivity.

By the way, the inventors had researched and examined effects of a paint film on infrared emission from various aspects, and discovered that the infrared emission is variable in response to surface conditions of the paint film. A spectral-emissivity within a wavelength region of 4-6 µm and a total infrared emissivity are raised above 0.5 and 0.85, respectively, by controlling a paint film to proper surface roughness, as proposed by JP2001-270031A. The proposed cladding member has a paint film, which is formed from paint composition mixed with polyester or acrylic wrinkle paint, and surface roughness of the paint film is controlled to 2-20 µm by arithmetical mean deviation of profile and 5-60 µm by average wavelength of undulation.

The inventors have further continued researches on properties of the formerly proposed cladding member, and discovered that increase of a solar radiation reflectance is effective for reduction of heat transmission.

The present invention aims at provision of a cladding member of a piping system for conveyance or storage of a low-temperature liquid, which can maintain a sufficient cold-insulating performance and to inhibit dew condensation.

A coated metal sheet for use as a cladding member proposed by the present invention has a paint film formed on a base metal sheet. Surface roughness of the paint film is controlled to 2-20 µm by arithmetical mean deviation of profile and 5-60 µm by average wavelength of undulation, so as to raise a spectral-emissivity within a wavelength region of 4-6 µm, an infrared emissivity and a solar radiation reflectance above 0.5, 0.85 and 0.2, respectively. The solar radiation reflectance of the paint film is controlled by dispersion of pigment with a solar radiation reflectance above 0.25 in the paint film.

An infrared emissivity is raised by controlling surface roughness of a paint film formed on a base metal sheet to 2-20 µm by arithmetical mean deviation of profile and 5-60 µm by average wavelength of undulation, as disclosed in JP2001-270031A. However, the high infrared emissivity means big thermal absorption, so that a temperature inside a piping system unfavorably rises due to penetration of a solar heat under sunshiny conditions. As increase of heat transmission to the interior of the piping system, a temperature of a liquid in a pipe becomes higher at parts enclosed with a thin heat insulator.

Penetration of a solar heat is mainly caused by irradiation of the cladding member with solar rays within visible and near-infrared regions, which are with bigger energy among solar light. Absorption of far-infrared energy is not so considerable to raise a temperature of a liquid. Since the effects of the solar rays on temperature-rising are different in correspondence with wavelength, it is expected that reflection of solar rays within a visible wavelength region, which are supposed to occupy a major part of heat transmission, will be effective for prevention of temperature-rising of a liquid.

In this consequence, the inventors have researched and examined effects of infrared rays and sunshine on temperature-rising of a piping system, and concluded in that dew condensation and temperature-rising of a pipe can be both suppressed by adjusting a solar radiation reflectance of a paint film to a proper level, while controlling surface roughness of the paint film to 2-20 µm by arithmetical mean deviation of profile and 5-60 µm by average wavelength of undulation.

Since temperature-rising originated in infrared energy absorption is mainly based on absorption of far-infrared energy, a paint film is controlled to surface roughness suitable for infrared emission. The controlled surface roughness is effective for increase of a spectral-emissivity within a wavelength region of 4-6 µm, resulting in prevention of dew condensation.

On the other hand, temperature-rising originated in sunshine is mainly based on absorption of solar rays within a visible or near infrared region. Therefore, penetration of a solar energy under sunshiny condition is diminished by increase of a solar radiation reflectance. Increase of the infrared emissivity and increase of the solar radiation reflectance are not mutually contradicted, but effective for prevention of dew condensation and for suppression of temperature-rising, respectively, as confirmed in the under-mentioned Examples.

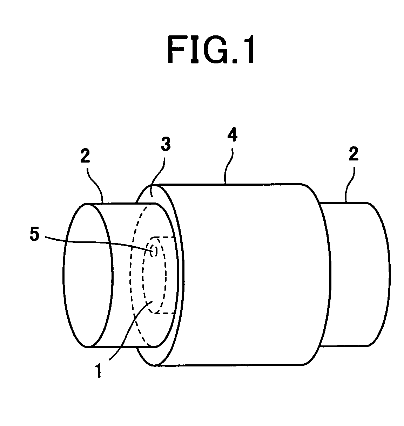

Fig. 1 is a perspective view illustrating a test body for searching dew-condensation and temperature-rising of a steel pipe

A base metal sheet is selected from an Al-coated steel sheet, a Zn-coated steel sheet, a Zn-A1 alloy-coated steel sheet, a Zn-Al-Mg alloy-coated steel sheet, a stainless steel sheet, an aluminum sheet and so on. In the case where a metal sheet coated with a clear paint film is used as a cladding member, a lustrous Al-coated steel sheet or a lustrous stainless steel sheet is preferable as a base metal sheet.

The base metal sheet is subjected to conventional pre-treatment, e.g. degreasing, cleaning, and/or chemical treatment, in prior to painting.

A paint composition mixed with aggregate or wrinkle paint is applied to the pre-treated base metal sheet and baked thereon, so as to form a paint film with surface roughness controlled to 2-20 µm by arithmetical mean deviation of profile and 5-60 µm by average wavelength of undulation. A solar radiation reflectance of the paint film is adjusted to a value of 0.2 or more, by dispersing pigment with a solar radiation reflectance of 0.25 or more at a proper ratio. The solar radiation reflectance is measured by a method regulated under JIS A5759.

The wrinkle paint, which is a mixture of two or more resins different in surface tension or cure rate from each other, is formed to a paint film with predetermined surface roughness under proper applying and baking conditions. Although there are no restrictions on the kind of base resins, a polyester or acrylic resin is representatively used as base resins for the wrinkle paint. The wrinkle paint applied to a base metal sheet is baked 30-120 seconds at 180-250 °C. An amount of the wrinkle paint applied to the base metal sheet is determined so as to control thickness of a paint film to 12 µm or more, in order to raise an infrared emissivity above 0.85. Insufficient thickness of the paint film causes a poor infrared emissivity without weakening reflection of solar radiation on a surface of the base metal sheet.

The wrinkle paint is mixed with pigment for increase of a solar radiation reflectance. The effect of the pigment on reflection of solar light is noted by dispersing the pigment in the wrinkle paint at a ratio of 5-120 wt. parts on the basis of 100 wt. parts of solid components of the paint. A proper mixing ratio varies in response to a kind of the pigment. For instance, a solar radiation reflectance is raised to a value above 0.2 by dispersion of a bright titania at a ratio of 5 wt. parts or more, or by dispersion of iron oxide at a ratio of 10 wt. parts or more.

The pigment for the purpose is selected from inorganic pigment, e.g. titania, iron oxide, chromium oxide, barium oxide, zinc oxide, magnesium oxide, cordierite or ultramarine blue, and organic pigment, e.g. phthalocyanine blue, phthalocyanine green, cyanine black or permanent violet. The pigment is of 50 µm or less (preferably 10 µm or less) in particle size.

An aggregate-containing paint composition is also useful for formation of a paint film suitable for the purpose. In this case, the paint film is controlled to predetermined surface roughness by dispersion of the aggregate in the paint film. The aggregate is selected from glass beads, silica particles, nylon beads, polyester beads, PAN (polyacrylonitrile) beads, PTFE (polytetrafluoro-ethylene) beads, acrylic beads and so on.

An a ggregate of 2-60 µm in average particle size is preferable for controlling surface roughness of the paint film to 2-20 µm by arithmetical mean deviation of profile and 5-60 µm by average wavelength of undulation. The paint composition, which is prepared by adding an aggregate of proper particle size to a base resin such as polyester, acrylic, silicone or silicone-modified polyester, is applied to a base metal sheet and baked 30-120 seconds at 180-250 °C.

A pigment, e.g. titania, iron oxide, chromium oxide, cobalt oxide, barium oxide or cordierite, is also dispersed in the aggregate-containing paint composition, in order to raise the solar radiation reflectance of a paint film above 0.2. A mixing ratio of the pigment is determined within a range of 5-120 wt. parts in correspondence with the solar radiation reflectance of the pigment itself. As the pigment is of a higher solar radiation reflectance, its mixing ratio can be held at a lower value. But, a lower limit of the mixing ratio is 5 wt. parts for adjusting a solar radiation reflectance to 0.2 or more.

### EXAMPLE

An Al-coated steel sheet of 0.5 mm in thickness was used as a base metal sheet. After the steel sheet was degreased, washed and treated with phosphate and chromate, each paint composition shown in Table 1 was applied to the steel sheet and baked to a paint film of 20 µm in thickness.

Wrinkle Color No. 6000 (offered by Nippon Oils And Fats BASF Coating Co., Ltd.) was used as polyester wrinkle paint. Wrinkle Color No. 3000 (offered by Nippon Oils And Fats BASF Coating Co., Ltd.) was used as acrylic wrinkle paint. Pre-Color No. 3000 (offered by Nippon Oils And Fats BASF Coating Co., Ltd.) was used as normal polyester paint. Pre-Color No. 2000 (offered by Nippon Oils And Fats BASF Coating Co., Ltd.) was used as normal acrylic paint. Any paint is colored by adding MnO₂ of 0.5 µm in particle size at a ratio of 10 mass %.

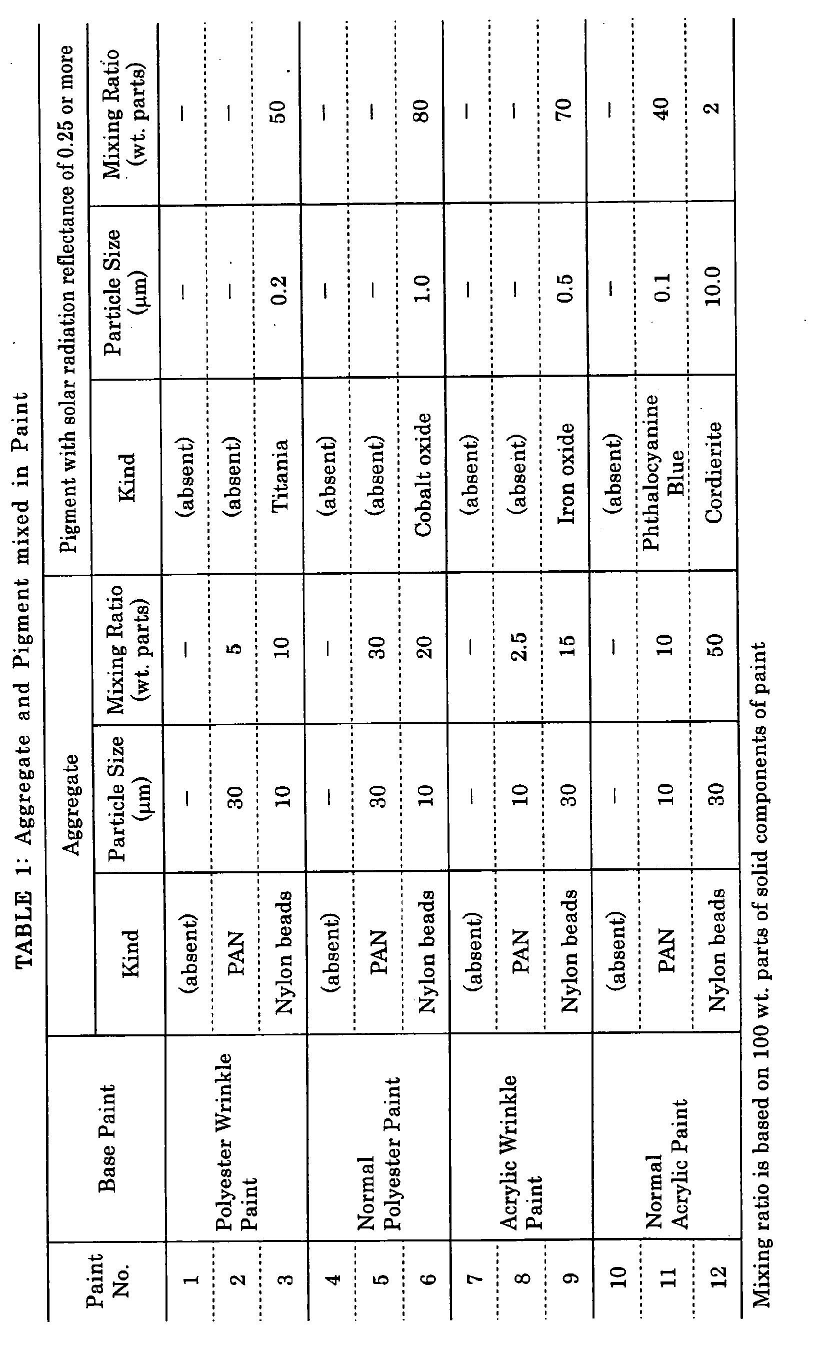

The surface roughness of each paint film was measured by a profile meter (Dektak 3030 offered by Ulvac Corp.) to calculate arithmetical mean deviation of profile and average wavelength of undulation. An infrared emissivity was measured by a radiometer (type-AERD offered by Device & Service Corp.). A spectral-emissivity within a wavelength region of 4-6 µm was measured by a spectroradiometer (SR IR Spectroradiometer offered by CI Systems). A solar radiation reflectance is measured by a spectroradiometer within ultraviolet, visible wavelength and near infrared regions (offered by Nihon Bunko Co., Ltd.).

Measurement results are shown in Table 2. It is understood that any steel sheet coated with a paint film with surface roughness of 2-20 µm by arithmetical mean deviation of profile and 5-60 µm by average wavelength of undulation had an infrared emissivity of 0.85 or more and a spectral-emissivity of 0.5 or more within a wavelength region of 4-6 µm.

On the other hand, an infrared emissivity and a spectral-emissivity of coated steel sheets were at low levels, when paint films formed on the base steel sheets were of surface roughness out of the specified arithmetical mean deviation of profile and the specified average wavelength of undulation.

The effect of the pigment on a solar radiation reflectance is also confirmed by the measurement results. That is, a paint film, which dispersed pigment with a solar radiation reflectance of 0.25 or more at a ratio of 5-120 wt. parts therein, had a solar radiation reflectance above 0.2, but other paint films in absence of such pigment had a solar radiation reflectance less than 0.2.

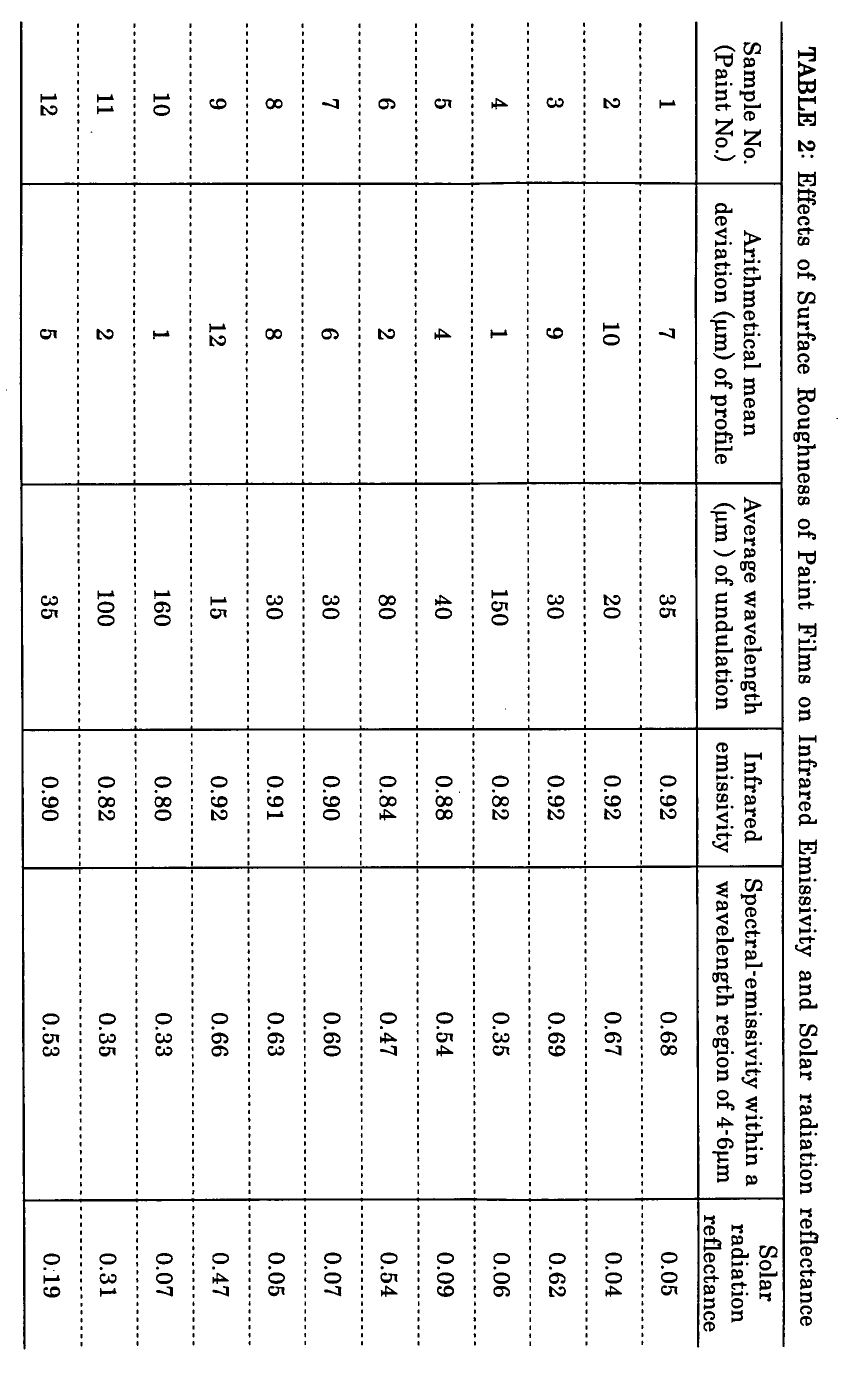

Each coated steel sheet was then used as a cladding member of a piping system for conveyance of LNG in order to evaluate its cold-insulating power and temperature-rising suppressing power.

A test body was prepared by fixing cylindrical urethane foam insulators 2, 2 of 250 mm in thickness to both ends of a cylindrical steel pipe 1 of 150 mm in diameter, 400 mm in length and 2 mm in thickness, enclosing the steel pipe 1 with the same insulator 3, and wrapping a cladding member 4 around the heat insulator 3 without any space, as shown in Fig. 1.

Liquid nitrogen was injected into the steel pipe 1 through a hole 5. After a temperature indicated by a thermocouple in contact with an outer surface of the steel pipe 1 was kept at -150 °C or lower over 60 minutes, an outer surface of the cladding member 4 was observed by naked eyes.

The thickness of the heat insulator 3 was reduced step by step under the above-mentioned conditions until dew condensation was detected on the surface of the cladding member 4, in order to determine minimum thickness of the heat insulator 3 necessary for inhibition of dew condensation. Furthermore, the test body was irradiated with light of 700 kcal/m²/hr using a sunshine lamp (offered by Toshiba Lighting & Technology Corp. Ltd.). After one hour-irradiation, a surface temperature of the cladding member 4 was measured.

The results shown in Table 3 prove that minimum thickness of the heat insulator necessary for inhibition of dew condensation became smaller as increase of an infrared emissivity and a spectral-emissivity within a wavelength region of 4-6 µm. A surface temperature of the cladding member 4 was kept at a lower level as increase of a solar radiation reflectance. That is, penetration of a solar heat is suppressed due to the higher solar radiation reflectance, and the steel pipe 1 is kept at a lower temperature.

On the other hand, a surface temperature of the cladding member 4 reached 50 °C or higher under sunshiny condition, in the case where a solar radiation reflectance of a paint film was less than 0.2 regardless an infrared emissivity of 0.85 or more and a spectral-emissivity of 0.5 or more within a wavelength region of 4-6 µm. The insufficient solar radiation reflectance means increase of heat transmission, and a heat insulator thinner than 200 mm was not applicable due to unfavorable evaporation of a low-temperature liquid. In the case where a cladding member 4, which had a paint film with inappropriate surface roughness was wrapped around the heat insulator 3, dew condensation on an outer surface of the cladding member 4 was promoted as thickness reduction of the heat insulator 3 although a solar radiation reflectance of the paint film was 0.2 or more.

**TABLE 3:**

| Dew Condensation and Temperature-Rising in Relation with Kinds of Cladding members | | |
|---|---|---|
| Test No. | Minimum Thickness (mm) of Heat Insulators Necessary for Inhibition of Dew-Condensation | Maximum Temperature (°C) of Cladding members |
| 1 | 150 | 58.5 |
| 2 | 150 | 58.6 |
| 3 | 150 | 38.3 |
| 4 | 220 | 57.9 |
| 5 | 180 | 56.9 |
| 6 | 210 | 41.8 |
| 7 | 160 | 57.6 |
| 8 | 155 | 58.3 |
| 9 | 150 | 43.6 |
| 10 | 220 | 57.6 |
| 11 | 200 | 49.2 |
| 12 | 160 | 53.4 |

A coated metal sheet, which has a paint film with surface roughness controlled to 2-20 µm, an infrared emissivity of 0.85 or more, 0.5 or more by a spectral-emissivity within a wavelength region of 4-6 µm and 0.2 or more by a solar radiation reflectance, is suitable as a cladding member of a piping system for storage or conveyance of a low-temperature liquid. An outer surface of the cladding member is prevented from dew condensation due to the higher infrared emissivity, in other words higher infrared absorptance, and the piping system is kept at a low temperature even under sunshiny conditions due to intensified reflection of solar rays within visible and near-infrared wavelength regions. Consequently, the life of the cladding member is prolonged without corrosion, and a heat insulator maintains its cold-insulating power over a long time due to suppression of heat transmission to a low-temperature liquid.

## Claims

1. A painted metal sheet for use as a dew-preventing cladding member, which comprises a base metal sheet coated with a paint film having a spectral-emissivity of 0.5 or more in a wavelength region of 4-6 µm, an infrared emissivity of 0.85 or more and a solar radiation reflectance of 0.2 or more.

2. The painted metal sheet defined by Claim 1, wherein the spectral-emissivity and the infrared emissivity is raised above 0.5 and 0.85, respectively by controlling surface roughness of the paint film to 2-20 µm by arithmetical mean deviation of profile and 5-60 µm by average wavelength of undulation.

3. The painted metal sheet defined by Claim 1, wherein the solar radiation reflectance is raised above 0.2 by dispersing pigment with a solar radiation reflectance of 0.25 or more in the paint film.
